(19) Europäisches Patentamt
European Patent Office
Office européen des brevets

(11) **EP 4 567 753 A2**

(12) **EUROPEAN PATENT APPLICATION**

(43) Date of publication:
**11.06.2025 Bulletin 2025/24**

(21) Application number: **25166578.2**

(22) Date of filing: **11.07.2023**

(51) International Patent Classification (IPC):
*G06V 20/64* *(2022.01)*

(52) Cooperative Patent Classification (CPC):
**G06T 7/162; G06F 30/10; G06F 30/17; G06F 30/20;**
**G06F 30/23; G06T 7/187; G06V 20/653;**
G06F 2113/10; G06F 2119/18

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(62) Document number(s) of the earlier application(s) in
accordance with Art. 76 EPC:
**23306186.0 / 4 492 325**

(71) Applicant: **Dassault Systèmes**
**78140 Vélizy-Villacoublay (FR)**

(72) Inventors:
• **BRUS, Mathieu**
**78140 Vélizy-Villacoublay (FR)**

• **MEHR, Eloi**
**78140 Vélizy-Villacoublay (FR)**

(74) Representative: **Bandpay & Greuter**
**11, rue Christophe Colomb**
**75008 Paris (FR)**

Remarks:
This application was filed on 27-03-2025 as a divisional application to the application mentioned under INID code 62.

(54) **SEGMENTING A 3D MODEL OF A MECHANICAL PART**

(57)     The disclosure notably relates to a computer-implemented method for segmenting a discrete 3D model representing a mechanical part. The method comprises obtaining the discrete 3D model, and applying a hierarchical segmentation to the discrete 3D model. The hierarchical segmentation comprises a first segmentation which comprises identifying, among elements of the discrete 3D model, first segments. Each of the first segments corresponds to a primitive exhibiting at least one slippable motion. The hierarchical segmentation then comprises a second segmentation which comprises identifying, among non-identified elements of the discrete 3D model, second segments. Each of the second segments corresponds to a surface produced by a CAD feature. The hierarchical segmentation then comprises a third segmentation which comprises identifying, among non-identified elements of the discrete 3D model, third segments. Each of the third segments corresponds to a free-form surface of the discrete 3D model.

**Description**

**TECHNICAL FIELD**

The disclosure relates to the field of computer programs and systems, and more specifically to a method, system, and program for segmenting a discrete 3D model representing a mechanical part.

**BACKGROUND**

A number of systems and programs are offered on the market for the design, the engineering, and the manufacturing of objects. CAD is an acronym for Computer-Aided Design, e.g. it relates to software solutions for designing an object. CAE is an acronym for Computer-Aided Engineering, e.g., it relates to software solutions for simulating the physical behavior of a future product. CAM is an acronym for Computer-Aided Manufacturing, e.g., it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production, and service.

In these contexts and other contexts, processing CAD 3D models is gaining wide importance. Specifically, segmenting a discrete 3D model, e.g., a mesh or a point cloud representing a mechanical part, is of particular importance.

European Patent Application EP21305195.6 filed on 16 February 2021 discloses a hierarchical segmentation of the 3D modeled object comprising a first segmentation and a second segmentation. Each of the first segments obtained by said first segmentation corresponds to a simple geometric surface of the 3D modeled object. Each of the second segments obtained by said second segmentation correspond to a free-form surface of the 3D modeled object.

Within this context, there is still a need for an improved method for segmenting a discrete 3D model representing a mechanical part.

**SUMMARY**

It is therefore provided a computer-implemented method for segmenting a discrete 3D model representing a mechanical part. The method comprises obtaining the discrete 3D model, and applying a hierarchical segmentation to the discrete 3D model. The hierarchical segmentation comprises a first segmentation which comprises identifying, among elements of the discrete 3D model, first segments. Each of the first segments corresponds to a primitive exhibiting at least one slippable motion. The hierarchical segmentation then comprises a second segmentation which comprises identifying, among non-identified elements of the discrete 3D model, second segments. Each of the second segments corresponds to a surface produced by a CAD feature. The hierarchical segmentation then comprises a third segmentation which comprises identifying, among non-identified elements of the discrete 3D model, third segments. Each of the third segments corresponds to a free-form surface of the discrete 3D model.

The method may comprise one or more of the following:

- the method comprises obtaining a predetermined set of CAD features, and in the second segmentation:

  o the identifying comprises exploring and merging neighboring non-identified elements of the discrete 3D model according to an increasing distance order that is based on one or more respective feature distances quantifying shape similarity between a pair of CAD feature geometric surface portions;
  o discarding each surface represented by a cluster of elements resulting from the merging and for which each fitting of a CAD feature to the surface results in a fitting error larger than the predefined fitting threshold;

- the second segmentation further comprises discarding each fitted CAD feature having a size smaller than a predefined a size threshold;
- the method further comprises iteratively aggregating neighboring pairs of non-discarded clusters of elements, wherein at each iteration the method comprises optimizing a fitting error, the optimizing being of the type

$$\min_{\{f \, fit \, on \, N_1 \cup N_2\}} score(f)$$

where $N_1$ and $N_2$ represent two neighboring surfaces and *score(f)* measures a similarity between the feature *f* and the union $N_1 \cup N_2$ of $N_1$ and $N_2$;

- the one or more feature distances consist in one feature distance penalizing mean curvature discrepancy between surfaces and/or penalizing irregularity of merged surfaces;
- the one feature distance is of the type:

$$d(N_1, N_2) =$$

$$\begin{cases} \left(\overline{k_{max}}^{(N_1)} - \overline{k_{max}}^{(N_2)}\right)^2 * d_{shape \, factor}(N_1, N_2) \; if \; mean\left(\overline{k_{max}}^{(N_1)^2}, \overline{k_{max}}^{(N_2)^2}\right) < \epsilon \\[3mm] \dfrac{\left(\overline{k_{max}}^{(N_1)} - \overline{k_{max}}^{(N_2)}\right)^2}{mean(\overline{k_{max}}^{(N_1)^2}, \overline{k_{max}}^{(N_2)^2})} * d_{shape \, factor}(N_1, N_2) \; else \end{cases}$$

where $N_1$ and $N_2$ represent neighboring surfaces, $\overline{k}_{max}^{(j)}$ represents a mean maximal curvature of $N_j$, and where:

$$d_{shape \, factor}(N_1, N_2)$$

$$= 1 + \max_{i \in \{1,2\}} \left(\left[\frac{P_{N_1 \cup N_2}}{\sqrt{A_{N_1 \cup N_2}}} - \frac{P_{N_i}}{\sqrt{A_{N_i}}}\right]_{\mathbb{R}^+} \min\left(\frac{A_{N_i}}{\alpha A_{N_{\bar{i}}}}, 1\right)\right)^2,$$

where $P_N$ represents the perimeter of N, $A_N$ the area of N, $[\ldots]_{\mathbb{R}^+}$ a clamping to $\mathbb{R}^+$, $N_{\bar{i}}$ a node $\in \{N_1, N_2\}$ which is not $N_i$, and $\alpha$ a hyperparameter defining a reduced impact of a small surface, $\varepsilon$ being a parameter;

- the method further comprises rescaling one or more segments resulting from the third segmentation; and applying the hierarchical segmentation to each rescaled one or more segments;
- the hierarchical segmentation is based on one or more tolerance thresholds, each tolerance threshold being a function of:

   o an imprecision level of the discrete 3D model, the tolerance threshold increasing as the imprecision level increases,
   o a discretization level (number of triangles or point density) of the discrete 3D model, the tolerance threshold increasing as the discretization level decreases, and/or
   o a diameter of the discrete 3D model, the tolerance threshold increasing as the diameter increases;

- the method stops the second segmentation when the minimum of the one or more respective feature distance is higher than a least one of the one or more tolerance thresholds;
- the first segmentation further comprises, for each surface resulting from the merging, according to a decreasing order of surface size:
- fitting a canonic primitive to the surface;

   o computing a fitting error; and
   o if the fitting error is lower than a predefined fitting threshold, aggregating to the surface neighboring surfaces for which the fitting error is as well lower than the predefined fitting threshold; and optionally wherein the first segmentation further comprises filtering the fitted canonic primitives, by discarding each primitive fitting a local canonic area of a free-form surface, and further optionally the first segmentation further comprises discarding fitted primitives having a size smaller than a predefined another size threshold;

- in the second segmentation, the exploring and merging is based on a constraint that surfaces connected by a boundary corresponding to a known geometrical delimitation between portions of the discrete 3D model cannot be merged; and/or
- the discrete 3D model stems from physical measurement of the mechanical part.

It is further provided an algorithm configured to run on a computer for segmenting a discrete 3D model representing a mechanical part. The algorithm comprises the following steps: obtaining the discrete 3D model and applying a hierarchical segmentation to the discrete 3D model. The hierarchical segmentation comprises a first segmentation, then a second segmentation, and then a third segmentation. The first segmentation comprises identifying, among elements of the discrete 3D model, first segments each corresponding to a primitive exhibiting at least one slippable motion. The second segmentation comprises identifying, among non-identified elements of the discrete 3D model, second segments each corresponding to a surface produced by a CAD feature. The third segmentation comprises identifying, among non-identified elements of the discrete 3D model, third segments each corresponding to a free-form surface of the discrete 3D model.

It is further provided an algorithm configured to run and/or be implemented on a computer for segmenting a discrete 3D model representing a mechanical part. The algorithm comprises means for obtaining the discrete 3D model, and means for applying a hierarchical segmentation to the discrete 3D model. The hierarchical segmentation comprises a first segmentation, then a second segmentation, and then a third segmentation. The first segmentation comprises identifying, among elements of the discrete 3D model, first segments each corresponding to a primitive exhibiting at least one slippable motion. The second segmentation comprises identifying, among non-identified elements of the discrete 3D model, second segments each corresponding to a surface produced by a CAD feature. The third segmentation comprises identifying, among non-identified elements of the discrete 3D model, third segments each corresponding to a free-form surface of the discrete 3D model.

It is further provided a computer program comprising instructions for performing the method.

It is further provided a computer readable storage medium having recorded thereon the computer program.

It is further provided a system comprising a processor coupled to a memory, the memory having recorded thereon the computer program.

**BRIEF DESCRIPTION OF THE DRAWINGS**

Non-limiting examples will now be described in reference to the accompanying drawings, where:

- FIG.s 1-8B show examples of the method; and

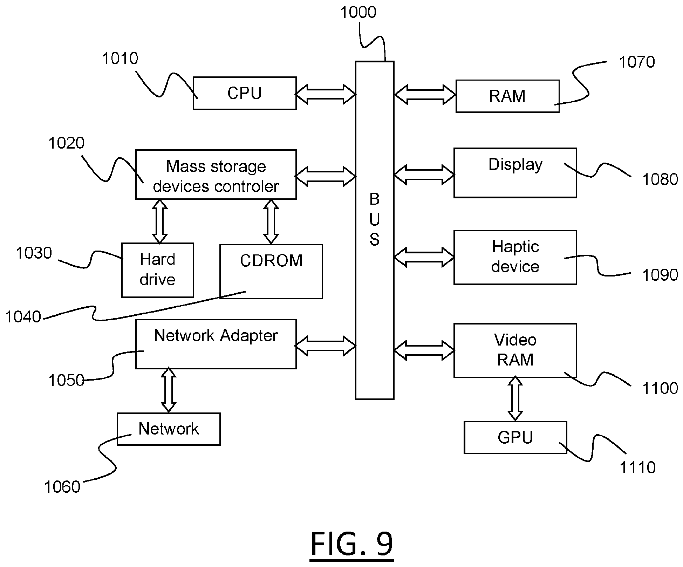

- FIG. 9 shows an example of the system.

**DETAILED DESCRIPTION**

It is proposed a computer-implemented method for segmenting a discrete 3D model. The discrete 3D model represents a mechanical part. The method comprises obtaining the discrete 3D model, and applying a hierarchical segmentation to the discrete 3D model. Said hierarchical segmentation comprises a first segmentation, then a second segmentation, and then a third segmentation. Said first segmentation comprises identifying first segments among elements of the discrete 3D model. Each of said identified first segments corresponds to a primitive which exhibits at least one slippable motion. Said second segmentation comprises identifying second segments among non-identified elements of the discrete 3D model (i.e., among non-identified elements in the first segmentation). Each of said identified second segments corresponds to a surface produced by a CAD feature. Said third segmentation comprises identifying third segments among non-identified elements of the discrete 3D model (i.e., among non-identified elements in the first segmentation and the second segmentation). Each of said identified third segments corresponds to a freeform surface of the discrete 3D model.

This constitutes an improved method for segmenting a discrete 3D model object, i.e., a discrete 3D model representing a mechanical part.

Notably, the method segments said 3D model, *i.e.* provides a set of segments each corresponding to a portion of the 3D model, by identifying segments corresponding to simple geometric surfaces (*i.e.* the first segments), segments each corresponding to a surface produced by a CAD feature (i.e., the second segments) and segments corresponding to free-form surfaces (*i.e.* the third segments). The method thereby provides a robust and accurate segmentation of the discrete 3D model. Indeed, the method does not merely identify segments corresponding to simple geometric surfaces, but also segments corresponding to a surface produced by a CAD feature and free-form surfaces, which may be segments that are complex to identify (*i.e.* fitting geometric primitives or features to these segments may be complex). The overall segmentation (*i.e.* the resulting set of first and second segments) is thus particularly accurate.

Furthermore, the method provides a multi-step hierarchical segmentation which improves the efficiency and robustness of the segmentation. Indeed, the method performs initially a first segmentation that identifies the segments corresponding to simple geometric primitives. The method thereby efficiently relies on the consideration that, at first, the simple geometric primitives may be efficiently identified in a discrete 3D model (i.e., a 3D modeled object), and so the method identifies them through the first segmentation. Thus, at the end of the first segmentation, the method has already yielded a partial segmentation of the 3D modeled object where the segments corresponding to the simple geometric surfaces are already identified. Thereby, there remains then to identify the segments corresponding to CAD features and free-form surfaces, which the method does through the second and third segmentations. The discrete 3D model contains at least one surface produced by a CAD feature (e.g., an extrusion). The method then applies the second segmentations on these remaining unsegmented parts to identify the second segments each corresponding to a surface produced by a CAD features. Such surfaces are more complex than the primitives identified in the first segmentation. In other words, the method starts with the least complex segments, carries on with segments corresponding to CAD feature, and thereby when it comes to the segments corresponding to the free-form surfaces, which are the most complex ones to identify due to their free-form geometry, the method identifies these segments within only a portion of the 3D modeled object, since the rest of the 3D modeled object is made of already identified first segments and second segments. The multi-segmentation approach thus provides efficiency and robustness.

The method is for segmenting a discrete 3D model representing a mechanical part. The method is thus a method of 3D segmentation. As previously explained, given a discrete 3D model (*e.g.* a mesh), 3D segmentation generally consists in splitting/partitioning the faces of the 3D model into several connected clusters, called segments, where each segment maximizes its inner consistency, while minimizing its similarity with respect to the other segments, the clusters/segments being the result of the segmentation and being possibly referred to as "the segmentation".

Compared to existing solutions in the prior art (e.g., the already cited European Patent Application EP21305195.6), the method particularly constitutes an improved solution by performing a second segmentation on surfaces corresponding to CAD features. In other words, the method separates the segmentation of such surfaces produced by a CAD feature from general free-form surfaces. The surfaces identified in the second segmentation may constitute a significant part of segmentation. In other words, in some cases of parts that may contain only or a significant amount of small surfaces produced by CAD features, the second segmentation allows to keep them separated whereas the third segmentation step would have merged some of them together to form a free-form surface. In a complete CAD reconstruction pipeline, it is typically important to precisely segment those surfaces corresponding to CAD features. On the other hand, the second segmentation (i.e., identifying second segments each corresponding to a surface produced by a CAD feature) allows recovering (i.e., identifying) CAD features that would be lost during the third segmentation step (if the second step is not done). It helps reduce the number of freeform segments and/or their size (e.g. their area on mesh for example As the method performs a hierarchical segmentation in which the segmentations are performed in an order and each (of the first, the second, and the third) segmentation identifies respective segments among non-identified elements of the discrete 3D model in the previous segmentation, such a separation of the second segmentation from the third segmentation significantly reduces the number of non-identified elements remained for the third segmentation. This improves the efficiency of the hierarchical segmentation of the method by reducing as much as possible the freeform segmentation. Furthermore, the method directly identifies the simple primitives and the CAD features and does not require post-processing steps of CAD feature identification after the segmentation.

The method implements this general segmentation framework. Specifically, the method takes as input the discrete 3D model object provided to/obtained by the method and outputs a set of segments. The set of segments may be referred to as "the segmentation outputted/yielded by the method" (*i.e.* of the discrete 3D model), or simply as "the segmentation". In the case of the method, the set of segments consists in the first segments, identified by the first segmentation, the second segments, identified by the second segmentation, and the third segments, identified by the third segmentation. The set of segments may optionally undergo a post-processing before being outputted by the method as the output segmentation. Although implementing the general segmentation framework, the method is specific in that the overall segmentation performed by the method, which is the hierarchical segmentation, comprises a first segmentation, a second segmentation, and a third segmentation. In other words, the set of segments that the method outputs is identified by a multi-step hierarchical segmentation as previously discussed, *i.e.* by three segmentations performed in a specific order (*i.e.*, the first before the second, the second before the third).

Each segment identified by the method, be it a first segment, a second segment, or a third segment, is a portion of the discrete 3D model constituting a surface which forms a geometrically-coherent portion of the shape of the discrete 3D model. Each segment identified by the method tends to maximize its inner consistency, while minimizing its similarity with respect to the other segments, with a clear border with respect to the other segments. For example, each segment may form an elementary surface of the discrete 3D model, *e.g.* that can be represented (*e.g.* fitted and/or parameterized) by a single CAD feature (*e.g.* a CATIA feature).

Each segment may form a surface which is geometrically-coherent from the point of view of the manufacturing of the mechanical part. In other words, the mechanical part may be, in the real-world, divided into portions, each portion having a respective geometry requiring or adapted to a respective manufacturing process (*e.g.* molding, additive manufacturing or machining), each portion being represented in the segmentation outputted by the method by one or more segments. In yet other words, the set of segments outputted by the method may consist in subsets each of one or more segments, where for each subset, the one or more segments of the subset altogether represent a surface shape of a portion of the mechanical part (*i.e.* a layout of material) coherent from a point of view of the manufacturing, *i.e.* requiring or adapted to a certain manufacturing process (*e.g.* possibly to be chosen among several suitable manufacturing processes). For example, one or more such subsets may each represent a respective portion of the mechanical part to be manufactured by machining and having each a shape (*i.e.* a geometry) adapted to be a path of a machining tool. Additionally or alternatively, one or more other subsets may each represent a respective portion of the mechanical part to be manufactured by molding and having each a shape (*i.e.* a geometry) corresponding to the shape (*i.e.* the geometry) of a coherent portion of the mold. The mold may itself be manufactured by machining and each such portion may present a shape (*i.e.* a geometry) adapted to be a path of a machining tool. Additionally or alternatively, one or more other subsets may each represent a respective portion of the mechanical part to be manufactured by additive manufacturing and having each a shape (*i.e.* a geometry) corresponding to the shape (*i.e.* the geometry) of a final outer layer formed by the additive manufacturing process. The method thus allows to identify portions of the mechanical part coherent in terms of manufacturing.

In examples, the discrete 3D model stems from physical measurement of the mechanical part. In such examples, the method may obtain the discrete 3D model via a 3D scanning process. In other words, the method may comprise, prior to obtaining the discrete 3D model, performing a scanning process on a real-world sample of a mechanical product. The 3D scanning process may form or be a part of a 3D reconstruction process. The 3D reconstruction process may comprise providing the mechanical part, providing one or more physical sensors each configured for acquiring a respective physical signal, and acquiring one or more respective physical signals by operating the one or more physical sensors on the mechanical part (*i.e.,* scanning the mechanical part with each sensor). The scanning process may output a point cloud or a mesh representing said mechanical part. The method may convert a point cloud to a mesh. In such examples, the method may form or be a part of a process to obtain a CAD model of a physical object via a scanning process. In such applications, the method may further comprise, after the segmentation, detecting a volume (or part of a volume) corresponding to a segment. Such a mold may be particularly relevant to fabricate a copy from a measured prototype or preparing a mass production stage. Such applications are particularly relevant to reverse engineering using a sample of a physical object while having no access to fabrication details of said object. For example, the method may be used to fabricate a mockup of an already existing manufacturing product.

The method is now further discussed.

The obtaining (i.e., providing) of the discrete 3D model may comprise retrieving said 3D model, *e.g.* from a (*e.g.* distant) database or memory where the discrete 3D model has been stored further to its creation or acquisition or obtention (*e.g.* through a reconstruction process as previously discussed). For example, the retrieving may comprise accessing the database or memory and downloading the discrete 3D model. Alternatively, the obtaining of the discrete 3D model may comprise performing physical measurements on the mechanical part and determining the discrete 3D model from the physical measurements, for example through a 3D reconstruction process. The providing of the discrete 3D model may alternatively comprise creating, *e.g.* by a user, said 3D model, *e.g.* by sketching it.

Further to the obtaining of the discrete 3D model, the method comprises performing a hierarchical segmentation of the discrete 3D model. The hierarchical segmentation comprises three segmentations: a first segmentation, a second segmentation, and a third segmentation. The first segmentation takes as input the provided discrete 3D model and outputs a partial segmentation thereof, *i.e.* the first segments. The second segmentation takes as input the part of the discrete 3D model not yet segmented as a result of the first segmentation, *i.e.*, the provided discrete 3D model minus the set of the first segments, and outputs a segmentation thereof, *i.e.* the second segments. The third segmentation takes as input the part of the discrete 3D model not yet segmented as a result of the first segmentation and the second segmentation, *i.e.*, the provided discrete 3D model minus the union of the set of the first segments and of the set of the second segments, and outputs a segmentation thereof, i.e. the third segments. The union of the set of the first segments, of the set of the second segments, and of the set of the third segments forms a set of segments which is the result of the hierarchical segmentation. This set of segments forms a segmentation of the provided discrete 3D model.

The first segmentation comprises identifying, among surfaces of the discrete 3D model, first segments each corresponding to a simple geometric surface of the discrete 3D model. In other words, the first segmentation finds among the surfaces of the discrete 3D model those which form simple geometric surfaces and identifies them as the first segments. A simple geometric surface is a primitive exhibiting at least one slippable motion. A slippable motion is a linear combination of a translation and of a rotation. In other words, a simple geometric surface is a primitive which is invariant by at least one linear combination of a translation or a rotation, and that may be fit by a canonic surface (e.g., plane, cylinder, cone, sphere, or torus). The concept of slippable motion is known from reference Gelfand N. and Guibas L. J., Shape Segmentation Using Local Slippage Analysis, Eurographics Symposium on Geometry Processing, 2004, which is incorporated herein by reference. Notably, the content of section 2 of this reference, which provides a definition of the slippable motions and a method for computing them, is incorporated herein by reference. The first segmentation may identify the first segments using any manner of identifying on the discrete 3D model the surfaces which are simple geometric surfaces.

In examples, the identifying of the first segments may comprise exploring and merging neighboring surfaces of the discrete 3D model. Exploring and merging means that the first segmentation iteratively visits neighboring surfaces of the discrete 3D model and merges them as long as their merge can form or contribute to form a first segment. Each surface is an outer portion of the discrete 3D model. Any surface may be the result of a previous merge of two surfaces. Now, the discrete 3D model may be a 3D mesh. In such a case, a surface is a mesh face (*e.g.* a triangle if the mesh is a triangular mesh), or a union of mesh faces resulting from a previous merge or iteratively from previous merges. The exploring and merging may in such a case use the mesh structure to iteratively visit neighboring mesh faces, or unions thereof, and merge them where appropriate. Alternatively, the discrete 3D model may be a 3D point cloud, in which case a surface is a surface defined by points of the point cloud. In such a case, the exploring and merging may use the point cloud structure by exploring and clustering neighboring point cloud points, which directly amounts to explore and merge neighboring surfaces defined by point cloud points. In such a case, at the beginning of the exploring and merging, a point may be considered as a surface for the purpose of executing the exploring and merging.

The exploring and merging are according to an increasing distance order that is based on one or more first distances. In other words, the exploring and merging is based on data including, for each first distance, values of the first distance each between neighboring surface portions, a surface portion being a portion of a surface. This data may be updated along the exploring and merging as surfaces are iteratively merged, such that new neighboring surfaces with new first distance values are formed. The exploring and merging are according to an increasing distance order that is based on the one or more first distances, *i.e.* the exploring and merging tends to explore first neighboring surfaces which are close according to the one or more first distances. Now, each first distance quantifies a shape similarity between simple geometric surface portions, *i.e.* between neighboring simple geometric surface portions as the method uses the first distances between neighboring portions (as neighboring surfaces are to be merged). Each first distance thereby quantifies, during the exploring and merging whether neighboring surfaces comprise neighboring portions forming altogether (*i.e.* if merged) a portion of one simple geometric surface, and if they do, they tend to be merged. Any such first distance can be used.

In examples, the method may comprise obtaining a predetermined set of CAD features. Then, in the second segmentation, the identifying comprises exploring and merging neighboring non-identified elements of the discrete 3D model according to an order. Said order is an increasing distance order that is based on one or more respective feature distances. This means that the second exploring and merging is according to an increasing distance order that is based on the one or more feature distances, *i.e.* the exploring and merging tends to explore first neighboring surfaces which are close according to the one or more feature distances. The one or more respective feature distances quantify shape similarity between a pair of CAD feature geometric surface portions. By "shape similarity", it is meant that each feature distance quantifies an extent to which the neighboring portions, if merged, form a geometrically coherent simple geometric surface or a portion thereof, *e.g.* with relatively low-varying curvatures and/or normal. Furthermore, the second segmentation discards each surface represented by a cluster of elements resulting from the merging. For each of the discarded surface(s), each fitting of a CAD feature to said surface results in a fitting error larger than the predefined fitting threshold.

The first segmentation may further comprise filtering the fitted canonic primitives. By "discarding" a fitted primitive it is meant that the corresponding surface to the fitted primitive is not added to the first segments. This improves robustness of the method. Indeed, the exploring and merging and fitting and aggregating may result in some cases in too many primitives that keeps the method from outputting a satisfactory segmentation. There may be some CAD feature surfaces that comprise many local regions which can be fitted by a canonic primitive, whereas they should not as they are not simple geometric surfaces/primitives. The filtering discards those local regions if they have been fitted. The discarded surfaces are not identified surfaces, while the non-discarded ones are identified surfaces.

The second segmentation may further comprise discarding each fitted CAD feature having a size smaller than a predefined a size threshold. By "discarding" a fitted CAD feature it is meant that the corresponding surface to the fitted CAD feature is not added to the second segments. The size for a fitted CAD feature refers to a characteristic size of the corresponding surface, for example the surface area or the diameter of said surface. This discarding of small features allows to accurately identify or discard surfaces in case they were not correctly merged/clustered by the exploring and merging, which further improves robustness of the method.

The method may further comprise iteratively aggregating neighboring pairs of non-discarded clusters of elements. In such an aggregation, the method iteratively explores elements (faces in case of the 3D mesh, or vertices in case of the 3D point cloud) of the provided 3D model's graph which are neighbors of elements belonging to the fitted CAD feature. In such examples, at each iteration, the method comprises optimizing a fitting error, the optimizing being of the type

$$\min_{\{f \ fit \ on \ N_1 \cup N_2\}} score(f)$$

where $N_1$ and $N_2$ represent two neighboring surfaces and *score*(*f*) measures a similarity between the feature *f* and the union $N_1 \cup N_2$ of $N_1$ and $N_2$. The minimization is to be solved among candidate features *f* fitted on the union $N_1 \cup N_2$. The score function represents the fitting error of a feature *f* with regards to the faces inside $N_1 \cup N_2$. This score function may be different for each type of features and different explicit forms can be used for a single type of feature. For example, the method may use a difference score function for extrusions, revolves and fillets. For instance for extrusions, the score function may be of the type:

$$score(f) = \min\{\mathcal{J}_S(u) \mid u \in \mathbb{R}^3, \; |u| = 1\}$$

with

$$\mathcal{J}_S(u) = \frac{1}{\mathcal{A}_S} \int_S \left(u \cdot n_p\right)^2 dvol_S,$$

where $n_p$ is a normal of an extrusion surface $S$, and $\mathcal{A}_S$ is a respective surface area.

In examples, the one or more second distances consist in one feature distance penalizing mean curvature discrepancy between surfaces and/or penalizing irregularity of merged surfaces. In other words, the one feature distance may comprise a first term penalizing mean curvature discrepancy between surfaces and/or a second term penalizing irregularity of merged surfaces. Alternatively, the second term may promote smoothness of a boundary between neighboring surfaces. The distance may for example be a multiplication of the two terms. The one feature distance may be of the type:

$$d(N_1, N_2)$$

$$= \begin{cases} \left(\overline{k_{max}}^{(N_1)} - \overline{k_{max}}^{(N_2)}\right)^2 * d_{shape\,factor}(N_1, N_2) \; if \; mean\left(\overline{k_{max}}^{(N_1)^2}, \overline{k_{max}}^{(N_2)^2}\right) < \epsilon \\[2em] \dfrac{\left(\overline{k_{max}}^{(N_1)} - \overline{k_{max}}^{(N_2)}\right)^2}{mean\left(\overline{k_{max}}^{(N_1)^2}, \overline{k_{max}}^{(N_2)^2}\right)} * d_{shape\,factor}(N_1, N_2) \; else \end{cases}$$

where $N_1$ and $N_2$ represent neighboring surfaces, $\overline{k}_{max}^{(j)}$ represents a mean maximal curvature of $N_j$, and where:

$$d_{shape\,factor}(N_1, N_2) = 1 + \max_{i \in \{1,2\}}\left(\left[\frac{P_{N_1 \cup N_2}}{\sqrt{A_{N_1 \cup N_2}}} - \frac{P_{N_i}}{\sqrt{A_{N_i}}}\right]_{\mathbb{R}^+} \min\left(\frac{A_{N_i}}{\alpha A_{N_{\bar{i}}}}, 1\right)\right)^2,$$

where $P_N$ represents the perimeter of $N$, $A_N$ the area of N, $[\dots]_{\mathbb{R}^+}$ a clamping to $\mathbb{R}^+$, $N_{\bar{i}}$ a node $\in \{N_1, N_2\}$ which is not $N_i$, and $\alpha$ a hyper-parameter defining a reduced impact of a small surface, $\varepsilon$ being a parameter.

The method may further comprise rescaling one or more segments resulting from the third segmentation, and applying the hierarchical segmentation to each rescaled one or more segments. The rescaling may comprise performing the method with a modified tolerance threshold.

The hierarchical segmentation may be based on one or more tolerance thresholds. Each tolerance threshold may be a function of an imprecision level (e.g., sag or noise) of the discrete 3D model. Such tolerance thresholds may increase as the imprecision level increases. Alternatively or additionally, each tolerance threshold may be a function of a discretization level (e.g., the number of triangles in a mesh or a point density in a point cloud) of the discrete 3D model. Such tolerance thresholds may increase as the discretization level decreases. Further alternatively or additionally, each tolerance threshold may be a function of a diameter of the discrete 3D model. Such tolerance thresholds may increase as the diameter increases. Each of above tolerance thresholds may be a linear function of the noise level.

The method may stop the second segmentation when the minimum of the one or more respective feature distance is higher than a least one of the one or more tolerance thresholds.

Further to the first segmentation and the second segmentation, the performing of the hierarchical segmentation then comprises a third segmentation. The third segmentation comprises identifying, among the non-identified surfaces of the discrete 3D model, third segments each corresponding to a free-form surface of the model. A free-form surface is any surface that is not a simple geometric surface. A free-form surface can thus not be fitted or parameterized by a simple primitives or a surface produced by a CAD feature (e.g., with any CAD feature of the predetermined set), but may still be parameterized using suitable tools (*e.g.* NURBS). The identifying of the third segments may comprise exploring and merging neighboring non-identified surfaces of the discrete 3D model. This may be referred to as "the third exploring and merging", as it refers to the exploring and merging of the third segmentation, to distinguish it from that of first segmentation and of the second segmentation. Exploring and merging means that the second segmentation iteratively visits neighboring non-identified surfaces of the 3D model and merges them as long as their merge can form or contribute to form a third segment. As previously explained, each surface is an outer portion of the 3D model, and may be the result of a previous merge of two surfaces. As also previously explained, the 3D model may be a 3D mesh, in which case a surface is a mesh face (*e.g.* a triangle if the mesh is a triangular mesh), or a union of mesh faces resulting a from previous merge or iteratively from previous merges. The second exploring and merging may in such a case use the mesh structure to iteratively visit neighboring mesh faces, or unions thereof, and merge them where appropriate. As also previously explained, alternatively, the 3D model may be a 3D point cloud, in which case a surface is a surface defined by points of the point cloud. In such a case, the second exploring and merging may use the point cloud structure by exploring and clustering neighboring point cloud points, which directly amounts to explore and merge neighboring surfaces defined by point cloud points. In such a case, at the beginning of the second exploring and merging, a point may be considered as a surface. Prior to the second exploring and merging, the method may comprise marking the first segments as identified and as not to be explored by the second exploring and merging.

The third exploring and merging is according to an increasing distance order that is based on one or more second distances. In other words, the third exploring and merging is based on data including, for each second distance, values of the second distance each between neighboring surface portions, a surface portion being a portion of a surface. This data may be updated along the third exploring and merging as surfaces are iteratively merged, such that new neighboring surfaces with new second distance values are formed. The third exploring and merging is according to an increasing distance order that is based on the one or more second distances, *i.e.* the exploring and merging tends to explore first neighboring surfaces which are close according to the one or more second distances. Now, each second distance quantifies a shape similarity between free-form surface portions, *i.e.* between neighboring free-form surface portions as the method uses the distances between neighboring portions (as neighboring surfaces are to be merged). Each second distance thereby quantifies, during the third exploring and merging whether neighboring surfaces comprise neighboring portions forming a geometrically coherent portion of a free-form surface, and if they do, they tend to be merged. In other words, by "shape similarity", it is meant in case of a second distance that the second distance quantifies an extent to which the neighboring portions, if merged, form a geometrically coherent free-form geometric surface or a portion thereof. Any such second distance can be used.

The first segmentation may further comprise (further to the exploring and merging) for each surface resulting from the merging (i.e. the surfaces of the mesh as outputted by the merging), according to a decreasing order of surface size (e.g. of surface area):

- fitting a canonic primitive to the surface, a canonic primitive being a primitive exhibiting at least one slippable motion, the concept of slippable motion having been previously defined and discussed;
- computing a fitting error; and
- if the fitting error is lower than a predefined fitting threshold, aggregating to the surface neighboring surfaces for which the fitting error is as well lower than the predefined fitting threshold;
- if the fitting error is larger than the predefined threshold, discarding the surface.

This allows to accurately identify or discard surfaces in case they were not correctly merged/clustered by the exploring and merging S200, which further improves robustness of the method.

By "descending order of size", it is meant that the method explores the surfaces resulting from the merging in the decreasing order of their sizes (e.g. areas) and performs the fitting, and possibly the aggregating, for these surfaces in this order. The exploration may be limited to the surfaces having large enough sizes (e.g. areas), e.g. larger than a predefined threshold. This allows to efficiently aggregate small merged/clustered surfaces/regions corresponding to a larger geometric primitive before trying to fit them.

The fitting may comprise, given the surface resulting from the merging, which corresponds a clustered node in the case of the previously-discussed implementation, attempting to fit to the surface one or more canonic primitives, e.g. chosen among a set of usual canonic geometric primitives using known primitive fitting techniques such as quadric fitting or BFGS optimization, or any primitive fitting technique discussed in reference A. Kaiser, A survey of Simple Geometric Primitives Detection Methods for Captured 3D data, Computer Graphics Forum 38(4), 2018 or in reference T. Birdal et. al., Generic Primitive Detection in Point Clouds Using Novel Minimal Quadric Fits, IEEE Transactions on Pattern Analysis and Machine Intelligence, 2019, which are both incorporated herein by reference. Then the method computes a fitting error, for each primitive of the attempt, the primitive with the lowest fitting error being chosen to fit to the surface. The set of usual canonic geometric primitives may include planes, cylinders, cones, and spheres.

If the fitting error for this primitive is lower than a predefined fitting threshold, e.g. if a given proportion of the elements of the surface (e.g. mesh elements if the discrete 3D model is a 3D mesh or point cloud points if the discrete 3D model is a 3D point cloud) have a distance (e.g. Euclidean distance) to the primitive closer than the threshold, then the surface, or the corresponding clustered node in the case of the previously-discussed implementation, is considered to correspond to the fitted primitive. If this is the case, the method then aggregates S220 to the surface neighboring surfaces for which the fitting error is as well lower than the predefined fitting threshold. In other words, the aggregating may comprise iteratively exploring neighboring surfaces of the surface and aggregating/merging them to the surface as long as their distance to the primitive is also lower than the given threshold. In the previously-discussed implementation, the aggregating S220 may perform any known successive neighbor aggregation method which iteratively explores elements (faces in case of the 3D mesh, or vertices in case of the 3D point cloud) of the provided discrete 3D model's graph which are neighbors of elements belonging to the fitted geometric primitive, and add them to the set of primitive elements if their distance to the primitive is also lower than the given threshold, using for example a region growing based approach. This allows to accurately classify all elements belonging to each geometric primitive, even if they were not correctly clustered due for example to the boundary curvature computation issues.

In the second segmentation, the exploring and merging may be based on a constraint that surfaces connected by a boundary corresponding to a known geometrical delimitation between portions of the 3D modeled object cannot be merged.

As widely known in the field of manufacturing CAD, a segmentation such as the segmentation outputted by the method may be used in various applications or processes which at some steps require or need a segmentation. Manufacturing CAD designates software solutions to assist design processes and manufacturing process, whereby the objective is to produce a physical product corresponding to a designed CAD 3D model. "Designing a manufacturing product/mechanical part/mechanical product" designates any action or series of actions which is at least a part of a process of elaborating a modeled object (3D or 2D) of the manufacturing product/mechanical part/mechanical product. The method may form such a process or may form at least a part of the process Within this context, the CAD model represents a manufacturing product (which is a mechanical part), that may be manufactured downstream to its design (e.g. with a design process that includes the method). The method may thus be included in such a manufacturing CAD process that includes a design process (i.e. of the mechanical part represented by the CAD 3D model) and/or manufacturing process (i.e. of the mechanical part upon completion of its design by editions of the CAD 3D model).

The segmentation of the discrete 3D model object according to the method provides an improved representation of the outer surface of the 3D modeled object, which may be of use in many applications. Furthermore, the segments may be parameterized, and thus made editable with CAD tools, further to the segmentation, which allows to manipulate (e.g. edit) these segments, which may also be of use in many applications. By "parameterized", it is meant that each segment may be fitted with exactly one 3D geometrical object represented by a parametric equation or a parametric function, thus involving one or more parameters, wherein the one or more parameters may take values each in a respective continuous range. A 3D parameterized geometrical object allows an easy manipulation and/or editability and/or efficient storage in memory, as opposed to non-parameterized 3D geometrical objects such as discrete representations (*e.g.* point clouds, meshes, voxel representations). The method may thereby generally be used to segment a measured discrete 3D model object and then processing it into an editable data structure.

The method may for example form or be a part of a step of CAD feature obtention within the design process, which may be a step of feature-tree construction, that is a step of construction of a tree of CAD features underlying the CAD model. The concept of feature-tree is well known in manufacturing CAD. The method thus generally manipulates modeled objects, such as the finite CAD model outputted by the method. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (e.g. a CAD system or a CAD software), it is additionally meant any system, software or hardware, adapted at least for designing a modeled object on the basis of a graphical representation of the modeled object and/or on a structured representation thereof (e.g. a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g. representing a product such as a part or an assembly of parts, or possibly an assembly of products. The 2D or 3D modeled object may be a manufacturing product, i.e. a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D model designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history-based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement, and the validation of products to manufacture. Such CAE solutions are provided by Dassault Systèmes under the trademark DYMOLA®. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, salespeople, and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

The modeled object taken as input by the method is a (3D) discrete geometrical representation of a manufacturing product/mechanical product/mechanical part. The discrete geometrical representation is a data structure which comprises a discrete set of pieces of data. Each piece of data may specify an element of the product/mechanical part, and be referred to as a discrete element. The discrete geometrical representation may be 3D or alternatively 2D. Yet alternatively, the discrete geometrical representation may be both 3D and 2D, i.e. may comprise a 3D portion which is a 3D discrete geometrical representation and a 2D portion which is a discrete geometrical representation, such as a hybrid 3D-2D meshing (e.g. for modeling a product comprising both thin parts, modeled with the 2D portions, and thick parts, modeled with the 3D portions). The discrete geometrical representation may in examples comprise a number of such pieces of data higher than 100, 1000, or 10000.

In case of a 3D discrete geometrical representation, the 3D discrete geometrical representation may be a solid/volume 3D discrete geometrical representation of the product/mechanical part, such as a solid 3D finite element model (FEM) or a 3D volume mesh (e.g. a 3D tetrahedral mesh). In such a case, each piece of data may represent a respective geometrical entity positioned in a 3D space such that the pieces of data form a solid representation of the mechanical part/product (i.e., "solid 3D discrete geometrical representation"). Each geometrical entity may represent a respective location (i.e., a material point) of the 3D object (in other words, a respective portion of material constitutive of a solid represented by the 3D object). The aggregation (i.e., union or juxtaposition) of the geometrical entities represents altogether the 3D object as a solid/volume. The 3D discrete geometrical representation may alternatively be a skin 3D discrete geometrical representation, representing a skin of the product/mechanical part, such as a 3D surface mesh (e.g. a triangular surface mesh) or a tessellation. In such a case, each piece of data may represent a respective geometrical entity positioned in a 3D space, such that the pieces of data form a representation of the mechanical product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). The aggregation (i.e., union or juxtaposition) of the geometrical entities represents altogether at least part of the outer surface of the object.

In the case of a 2D discrete geometrical representation, each piece of data may represent a respective geometrical entity positioned in a 2D space. The 2D discrete geometrical representation may be a 2D finite element mesh or any 2D mesh. The discrete geometrical representation may be associated with one or more thickness value(s), for example a distribution of thickness value over its finite elements. Such a 2D discrete geometrical representation may for example represent a generally planar product, such as a stamping part (e.g., with a constant thickness value) or a composite material part (e.g., with different thickness values).

The segmentation outputted by the method may be or form a CAD model, for example comprising or consisting in a feature tree and/or a B-rep. Such a model may stem from a CAE model and may results from a CAE to CAD conversion process, that the method may for example comprise at an initial stage.

The CAD model may be feature-based (e.g. it may comprise a feature tree, and optionally a corresponding B-rep obtained by executing the feature tree). A feature-based 3D model allows (e.g. during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (e.g. during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders, and lasers are examples of common machine tools whose operations can be automated with CNC.

A key characteristic of a CAD model is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (e.g. footprint), in addition to transforming the CAE model into a more easily editable CAD model.

The generation of a custom computer program from CAD files may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed, and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic, or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep does not contain any history-based information.

The method may be included in a production process, which may comprise, after performing the method, producing a physical product corresponding to the modeled object designed/processed/outputted by the method. The production process may comprise the following steps:

- (e.g. automatically) applying the method, thereby obtaining the CAD model comprising one or more segments;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise the following steps:

- editing the obtained CAD model;
- performing simulation(s) based on the CAD model or on a corresponding CAE model (e.g. the CAE model from which the CAD model stems, after a CAE to CAD conversion process), such as simulations for validation of mechanical, use and/or manufacturing properties and/or constraints (e.g. structural simulations, thermodynamics simulation, aerodynamic simulations);
- editing the CAD model based on the results of the simulation(s);
- optionally (i.e. depending on the manufacturing process used, the production of the mechanical product may or may not comprise this step), (e.g. automatically) determining a manufacturing file/CAM file based on the (e.g. edited) CAD model, for production/manufacturing of the manufacturing product;
- sending the CAD file and/or the manufacturing file/CAM file to a factory; and/or
- (e.g. automatically) producing/manufacturing, based on the determined manufacturing file/CAM file or on the CAD model, the mechanical product originally represented by the model outputted by the method. This may include feeding (e.g. automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, e.g. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (i.e. a designer), performing one or more editions of the CAD model, e.g. by using a CAD solution. The modifications of the CAD model may include one or more modifications each of a geometry and/or of a parameter of the CAD model. The modifications may include any modification or series of modifications performed on a feature tree of the model (e.g. modification of feature parameters and/or specifications) and/or modifications performed on a displayed representation of the CAD model (e.g. a B-rep). The modifications are modifications which maintain the technical functionalities of the part/product, i.e. the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (e.g. automatically) determining a production file from the CAD model (e.g. any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds.com/welcome/fr/compassworld/rootroles/nc-shop-floor-programmer,
- The NC Mill-Turn Machine Programmer of Dassault Systèmes illustrated on https://my.3dexperience.3ds.com/welcome/fr/compassworld/rootroles/nc-mill-turn-machine-programmer, and/or
- The Powder Bed Machine Programmer of Dassault Systèmes illustrated on https://my.3dexperience.3ds.com/welcome/fr/compassworld/rootroles/powder-bed-machine-programmer.

The product/part may be an additive manufacturable part, i.e. a part to be manufactured by additive manufacturing (i.e. 3D printing). In this case, the production process does not comprise the step of determining the CAM file and directly proceeds to the producing/manufacturing step, by directly (e.g. and automatically) feeding a 3D printer with the CAD model. 3D printers are configured for, upon being fed with a CAD model representing a mechanical product (e.g. and upon launching, by a 3D printer operator, the 3D printing), directly and automatically 3D print the mechanical product in accordance with the CAD model. In other words, the 3D printer receives the CAD model, which is (e.g. automatically) fed to it, reads (e.g. automatically) the CAD model, and prints (e.g. automatically) the part by adding together material, e.g. layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, e.g. by a user (e.g. an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (e.g. automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/-temperature, and other parameters).

The product/part may alternatively be a machined part (i.e. a part manufactured by machining), such as a milled part (i.e. a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (e.g. automatically) checking if the CAD model has any geometric particularity (e.g. error or artefact) that may affect the production process and (e.g. automatically) correcting such particularities. For example, machining or milling based on the CAD model may not be carried out if the CAD model still comprises sharp edges (because the machining or milling tool cannot create sharp edges), and in such a case the determination of the CAM file may comprise (e.g. automatically) rounding or filleting such sharp edges (e.g. with a round or fillet radius that corresponds, e.g. substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (e.g. rounding or filleting of geometries) may be carried out automatically as previously discussed, but also, by a user (e.g. a machining engineer), which performs the correction by hand on a CAD and/or CAM solution, e.g. the solution constraining the user to perform corrections that make the CAD model compliant with specifications of the tool used in the machining process.

Further to the check, the determination of the CAM file may comprise (e.g. automatically) determining the machining or milling path, i.e. the path to be taken by the machining tool to machine the product. The path may comprise a set of coordinates and/or a parameterized trajectory to be followed by the machining tool for machining, and determining the path may comprise (e.g. automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, e.g. that the tool continuously follows without breaking contact with the material to be cut. Alternatively, the path may be a concatenation of a sequence sub-paths to be followed in a certain order by the tool, e.g. each being continuously followed by the tool without breaking contact with the material to be cut. Optionally, the determination of the CAM file may then comprise (e.g. automatically) setting machine parameters, including cutting speed, cut/pierce height, and/or mold opening stroke, for example based on the determined path and on the specification of the machine. Optionally, the determination of the CAM file may then comprise (e.g. automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (e.g. directly and automatically) fed to the machining tool and/or the machining tool may then (e.g. directly and automatically) be programmed by reading the file, upon which the production process comprises the producing/manufacturing step where the machine performs the machining of the product according to the production file, e.g. by directly and automatically executing the production file. The machining process comprises the machining tool cutting a real-world block of material to reproduce the geometry and/or distribution of material captured by the CAD model, e.g. up to a tolerance error (e.g. tens of microns for milling).

The product/part may alternatively be a molded part, i.e. a part manufactured by molding (e.g. injection-molding). In such a case, the production process may comprise the step of determining the CAM file. This step may be carried out automatically, by any suitable CAM solution to automatically obtain a CAM file from a CAD model of a molded part. The determining of the CAM file may comprise (e.g. automatically) performing a sequence of molding checks based on the CAD model to check that the geometry and/or distribution of material captured by the CAD model is adapted for molding, and (e.g. automatically) performing the appropriate corrections if the CAD model is not adapted for molding. Performing the checks and the appropriate corrections (if any) may be carried out automatically, or, alternatively, by a user (e.g. a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known per se from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (e.g. automatically) performing the molding based on the outputted file, where the mold shapes, for the determined hardening time, a liquid material into a shape that corresponds to the geometry and/or distribution of material captured by the CAD model, e.g. up to a tolerance error (e.g. up to the incorporation of draft angles or to the modification of draft angles, for demolding).

The product/part may alternatively be a stamped part, also possibly referred to as "stamping part", i.e. a part to be manufactured in a stamping process. The production process may in this case comprise (e.g. automatically) determining a CAM file based on the CAD model. The CAD model represents the stamping part, e.g. possible with one or more flanges if the part is to comprise some, and possibly in this latter case with extra material to be removed so as to form an unfolded state of one or more flanges of the part, as known per se from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (e.g. automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, e.g. as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, e.g. directly and automatically, the CAM file, and perform the stamping process (e.g. automatically) based on the file. The stamping process may comprise stamping (e.g. punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

FIG. 9 shows an example of the system, wherein the system is a client computer system, e.g. a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

It is further provided an algorithm configured to run on a computer for segmenting a discrete 3D model representing a mechanical part. The algorithm comprises the following steps: obtaining the discrete 3D model and applying a hierarchical segmentation to the discrete 3D model. The hierarchical segmentation comprises a first segmentation, then a second segmentation, and then a third segmentation. The first segmentation comprises identifying, among elements of the discrete 3D model, first segments each corresponding to a primitive exhibiting at least one slippable motion. The second segmentation comprises identifying, among non-identified elements of the discrete 3D model, second segments each corresponding to a surface produced by a CAD feature. The third segmentation comprises identifying, among non-identified elements of the discrete 3D model, third segments each corresponding to a free-form surface of the discrete 3D model.

The algorithm may be part of a manufacturing CAD process as discussed above for the method in which the mechanical part is intended to be manufactured upon the segmenting of the discrete 3D model of the mechanical part. Alternatively or additionally, the algorithm may be a part of a 3D scanning process as discussed above for the method, in which the mechanical part's model stems from a scan, upon which the algorithm processes the model by segmenting it and obtains a segmentation thereof.

It is yet further provided an algorithm configured to run and/or be implemented on a computer for segmenting a discrete 3D model representing a mechanical part. The algorithm comprises means for obtaining the discrete 3D model, and means for applying a hierarchical segmentation to the discrete 3D model. The hierarchical segmentation comprises a first segmentation, then a second segmentation, and then a third segmentation. The first segmentation comprises identifying, among elements of the discrete 3D model, first segments each corresponding to a primitive exhibiting at least one slippable motion. The second segmentation comprises identifying, among non-identified elements of the discrete 3D model, second segments each corresponding to a surface produced by a CAD feature. The third segmentation comprises identifying, among non-identified elements of the discrete 3D model, third segments each corresponding to a free-form surface of the discrete 3D model.

By an "algorithm" it is meant a (finite) sequence of instructions for performing the method. By "an algorithm configured to run on a computer" it is meant an algorithm in which said instructions are in a format (e.g., a computer language) and/or convertible (e.g., using a compiler) to said format which is recognizable and performable by a computer. Such an algorithm may be an algorithm configured to be implemented on a computer. Said computer may be configured to run the algorithm upon compiling its implementation. Such an algorithm may form a computer-implemented algorithm. More specifically, such an algorithm may comprise further instructions to perform any example of the computer-implemented method discussed above. By "means for obtaining the discrete 3D model" or "means for applying a hierarchical segmentation to the discrete 3D model" it is meant any manner (hardware and/or software) technically suitable to obtain the discrete 3D model or applying the hierarchical segmentation, respectively.

An implementation of the method for segmenting a discrete 3D model is now discussed.

The implementation is related to the field of 3D geometry processing, and computational geometry. More specifically, the implementation aims at segmenting a manifold 3D mesh or point cloud representing a 3D CAD part, namely a 3D model. Such a 3D model typically consists of both simple geometric features or primitives (e.g., cylinders, planes, extrudes, etc.) and free-form features (e.g., fillets, sweeps, etc.), as designed in CAD software.

The implementation develops a computationally efficient hierarchical clustering in five main steps:
In the first step, only simple geometric primitives are segmented. Those primitives are then detected and fit on the corresponding regions, in order to filter the wrong ones and extend the remaining ones to neighbouring faces, similarly to a region growing process. The primitive nodes are then frozen.

In the second step, CAD features are segmented. The features are then detected and fit on the regions. Then, the adjacent compatible features are merged and finally the wrongly fit features are filtered. Like geometric primitives in the first step, the feature nodes are then frozen.

In the third step, the remaining free-form surfaces are segmented.

In the fourth step, the obtained segmentation is post-processed to remove small regions or isolated faces and to merge compatible geometric primitives.

In the fifth step, the previous steps are all re-applied to free-form surfaces until no more regions can be segmented further. This allows capturing primitives and features at smaller scales.

The hierarchical clustering of the implementation is based on a graph topology. The implementation employs a dual graph formulation for mesh inputs, or a nearest neighbour graph for point cloud inputs. The distances between two connected regions are based on curvatures of their faces (or points), as well as a shape factor favouring smooth boundaries. In addition, the implementation uses an additional distance describing the smoothness of the border of two connected regions, in order to prevent the merge of two similar regions separated by a sharp border.

Such an implementation provides a fast and robust framework for CAD segmentation of both point clouds and meshes. The provided framework allows to segment simple geometric primitives, but also CAD features (extrusions, revolutions, fillets) as well as free-form surfaces (such as NURBS). The implementation is also capable to take into account the sharp edges of the input model.

The main advantages of this segmentation framework according to the implementation are the followings:

- The useful hyper parameters are automatically inferred.
- It is an automatic segmentation pipeline that could then ease a CAD feature tree retrieval process as CAD features are directly segmented.
- It allows capturing geometric primitives and features at different scales.
- It does not rely on any machine learning technique.

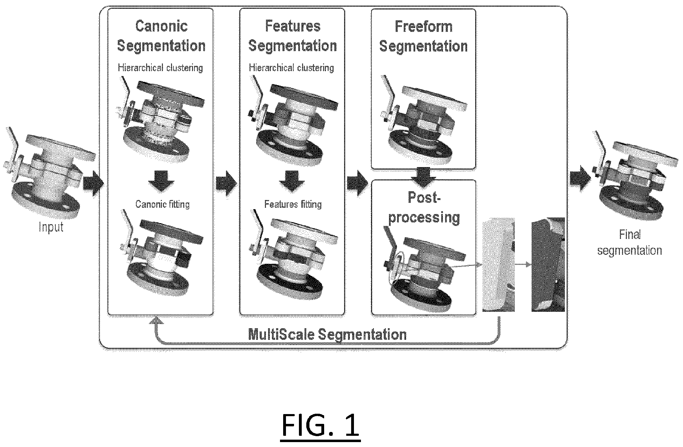

An example pipeline of a Graph-based Segmentation framework according to the implementation is now discussed in more details. FIG. 1 presents an example of the whole pipeline.

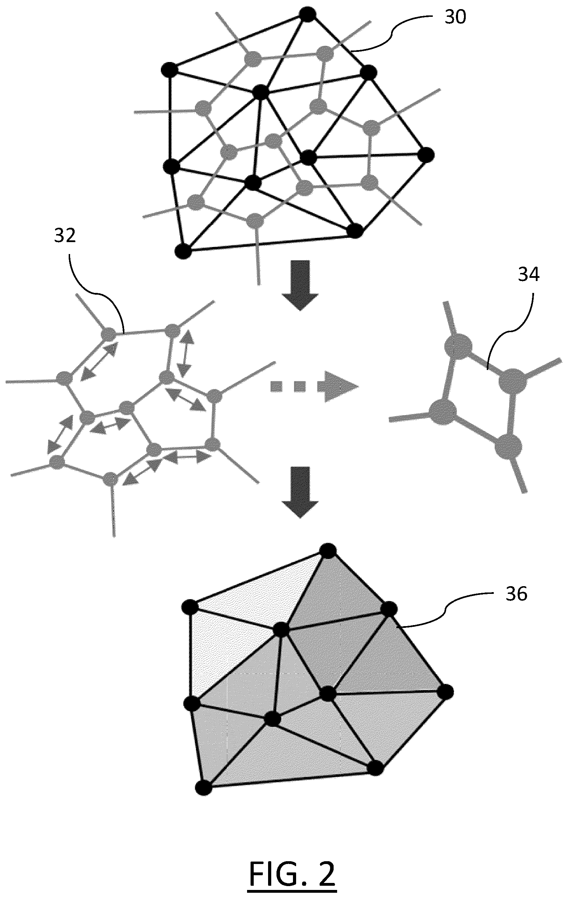

The segmentation framework is based on hierarchical graph clustering as in European Patent Application EP21305195.6 filed on 16 February 2021 by Dassault Systèmes which is incorporated herein by reference. Such a framework may have the same implementation as the cited patent application to ensure a fast segmentation algorithm. The segmentation may take as input a point cloud or a mesh. FIG. 2 presents an illustration of a segmentation framework based on hierarchical graph clustering.

The segmentation comprises a set of hyperparameters to be set. The setting of these hyperparameters in the implementation is now discussed.

The set of hyperparameters may include one or more of stopping thresholds for hierarchical clustering, canonic fitting tolerances, and minimal canonic area. This set allows the pipeline to deal with different type of inputs (e.g., tessellated meshes, or noisy inputs) and with different levels of noise and discretization.

In order to facilitate the setting of these hyperparameters by a user, the implementation defines two high-level hyperparameters based on which the implementation computes the rest of the hyperparameters. Thereby, instead of setting the whole set of hyperparameters, the user may only set said two high-level hyperparameters and the implementation computes the rest automatically.

Said two high-level hyperparameters that are used to compute the other useful hyperparameters may be the sag for tessellated meshes or the noise level for other type of inputs (like point clouds and noisy meshes), and the level of discretization. The implementation of these two high-level hyperparameters are now discussed.

For a tessellated mesh, the sag represents the maximum fixed distance between the discretized mesh and the exact surface it approximates. This parameter should be given by the user. The value may be in the range [0.01, 0.05].

For an input, the noise is defined as a random variable that is applied to the elements of the input during acquisition by a scanner for example. For point clouds, such a noise represents the distance between a point and the surface it is supposed to lie on. The implementation defines the noise level as the standard deviation of this random variable. The implementation then may use several techniques to estimate this noise level for a given input. The following are examples of how this noise level could be estimated.

The first approach consists of applying a RANSAC to detect significant geometric canonics on the 3D input. Then, the noise level is the fitting error of said significant canonics. Furthermore, to distinguish noise from real wanted small curvature, the implementation computes the correlation between neighbouring points noise on a fitted canonic.

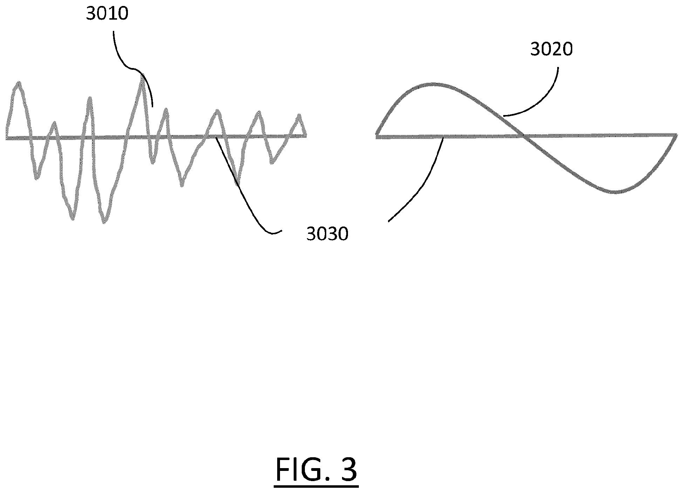

Considering the 2D sketches 3010 and 3020 presented in FIG. 3., sketch 3010 presents a noisy curve whereas sketch 3020 is not noisy. However, a same line 3030 may be fit with the same noise level for both of 3010 and 3020. The main difference between the noisy case and the smooth case is that neighbouring point's noises would be independent for the noisy curve 3010 whereas it would not be for the curve 3020.

The implementation may alternatively estimate the noise level for meshes using spectral mesh processing. The idea is to compute the mean-Laplacian coordinate of the mesh before and after applying a Laplacian smoothing (which is a mesh smoothing technique) and then, compute the shift between those coordinates. This would be more robust than only comparing the initial mesh and the mesh after Laplacian smoothing as Laplacian smoothing shrinks the mesh.

For discretization level estimation, the implementation computes the discretization level by considering geometric attributes of the input. For example, for input meshes, the implementation computes a geometric attribute as the ratio between the mean area of the faces and the scale of the mesh (which is defined by the radius of the bounding sphere of the mesh). For input point clouds, the implementation computes a geometric attribute by computing a density of points.

For computation of said geometric attributes, the implementation may compute some geometric attributes before the segmentation process, such as normals, curvatures, boundaries prior using dihedral angles or maximum distance to surface for tessellated meshes.

Segmentation using hierarchical graph clustering is now discussed.

*Simple geometric primitives segmentation*

The implementation may use a simple geometric primitives segmentation. In this case, the first step of the segmentation consists in segmenting the simple geometric primitives (e.g., planes, cylinders, or spheres). In this step, the nodes are first clustered considering geometrical distances based on curvatures and normals and then canonics are fitted, aggregated, and filtered. The stopping thresholds for the distances of hierarchical clustering, the fitting error tolerance and the minimal canonic size can be computed given the high-level parameters previously defined.

The stopping thresholds can be determined using linear functions of the noise level, which are determined to interpolate between an empirical value for noiseless meshes and another one for the noisiest meshes. The fitting error tolerance can be the noise level. For the minimal canonic size, the implementation considers a canonic relevant when having at least 10 input elements and then compute the minimal canonic size as the mean size of all elements times 10.

The simple geometric primitives are then frozen during the next steps of the segmentation.

*CAD features segmentation*

The second step of the segmentation is the CAD features segmentation. The implementation can consider all types of CAD features that can be fit on meshes or point clouds like extrusions, revolutions, or fillets for example.

*Features clustering*

First, as for the canonics, the implementation needs to make a first hierarchical clustering to group nodes. To do so, the implementation uses the following distance between two adjacent nodes $N_1$ and $N_2$:

$$d(N_1, N_2)$$
$$= \begin{cases} \left(\overline{k_{max}}^{(N_1)} - \overline{k_{max}}^{(N_2)}\right)^2 * d_{shape\,factor}(N_1, N_2)\ if\ mean\left(\overline{k_{max}}^{(N_1)^2}, \overline{k_{max}}^{(N_2)^2}\right) < \epsilon \\ \dfrac{\left(\overline{k_{max}}^{(N_1)} - \overline{k_{max}}^{(N_2)}\right)^2}{mean\left(\overline{k_{max}}^{(N_1)^2}, \overline{k_{max}}^{(N_2)^2}\right)} * d_{shape\,factor}(N_1, N_2)\ else \end{cases}$$

where $\varepsilon$ is a tolerance small enough ($10^{-8}$ for example) to avoid dividing by 0.

This distance amounts to comparing the relative deviation between mean maximum curvature of regions, weighted by a term which attempts to regularize the shape factor of the merged regions. For example, the shape factor may be of the type:

$$d_{shape\,factor}(N_1, N_2) = 1 + \max_{i \in \{1,2\}}\left(\left[\frac{P_{N_1 \cup N_2}}{\sqrt{A_{N_1 \cup N_2}}} - \frac{P_{N_i}}{\sqrt{A_{N_i}}}\right]_{\mathbb{R}^+} min\left(\frac{A_{N_i}}{\alpha A_{N_{\bar{i}}}}, 1\right)\right)^2$$

where $P_N$ represents the perimeter of a node N, $A_N$ its area, $[...]_{\mathbb{R}^+}$ the clamping to $\mathbb{R}^+$, $N_{\bar{i}}$ the node $\in \{N_1, N_2\}$ which isn't $N_i$ and $\alpha$ a hyperparameter defining the reduced impact of a relatively small node. Other possible distance such as the Ward distance may be employed.

This distance penalizes the increase of non-circularity - that is how far from the regularity of a circle a shape is - resulting from the merge of two nodes compared to that of the two initial nodes, weighted by the relative sizes of the nodes, to not overly penalize the merge of a large irregular node with a small regular one. The implementation considers an increase of non-circularity, and not its value itself, as the implementation does not seek for all segmented regions to be circular, but seeks to favor merges which improve region regularity instead of deteriorating it.

Another example of a shape factor distance could be one promoting the smoothness of a region's boundaries by, for instance, on a mesh, penalizing the sum of the angles between adjacent edges.

Furthermore, in order to improve robustness, before clustering the non-canonic surfaces of the 3D shape, the implementation re-computes the curvatures of the elements of the 3D shapes which do not belong to a canonic using only other non-canonic elements as neighbors to average over.

This gives more accurate curvature values around the intersections between non-canonic surfaces and canonic primitive surfaces.

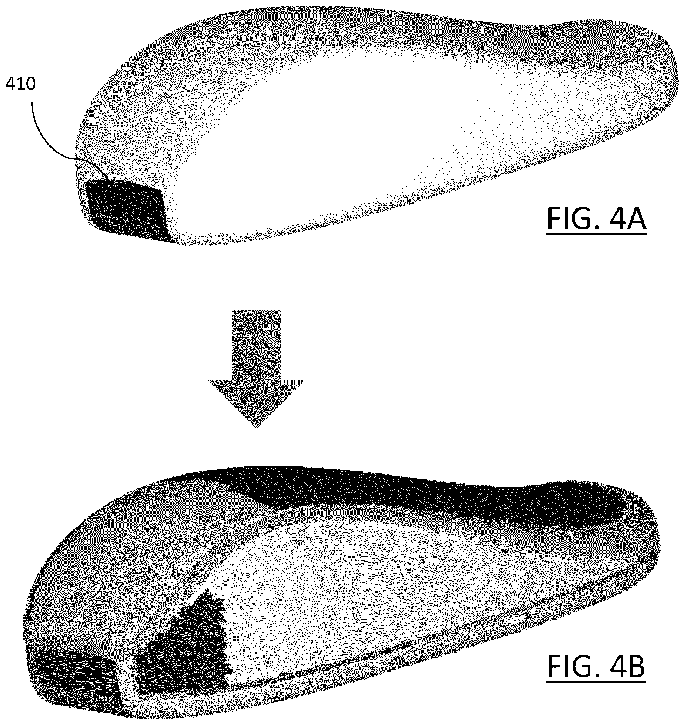

The clustering is stopped when the minimum distance between pairs of nodes is higher than a threshold that can be computed using the high-level hyperparameters. As in the canonic segmentation step, this threshold can be determined using a linear function of the noise level, which is made to interpolate between an empirical value for noiseless meshes and another one for the noisiest meshes. FIG.s 4A-B illustrate such a clustering. The colored regions 410 on the FIG. 4A represents the frozen canonics.

### *Features fitting*

Once the previous clustering is done, the implementation fit CAD features to each resulting node. To do so, given a clustered node, the implementation seeks to fit all CAD features desired to its elements using features fitting techniques. Some examples of features fitting techniques are detailed in European Patent Application EP21306184.9 filed on 31 August 2021 by Dassault Systèmes for extrusions, European Patent Application EP21305763.1 filed on 04 June 2021 by Dassault Systèmes for revolutions, and European Patent Application EP22306451.0 filed on 29 September 2022 by Dassault Systèmes for fillets, which are incorporated herein by reference. For each features, the implementation then computes a fitting error and keep only features whose error are beyond a given threshold. This threshold is dependant to the noise level and can be a linear function of the noise level; this function being determined to interpolate between an empirical value for noiseless meshes and another one for the noisiest meshes.

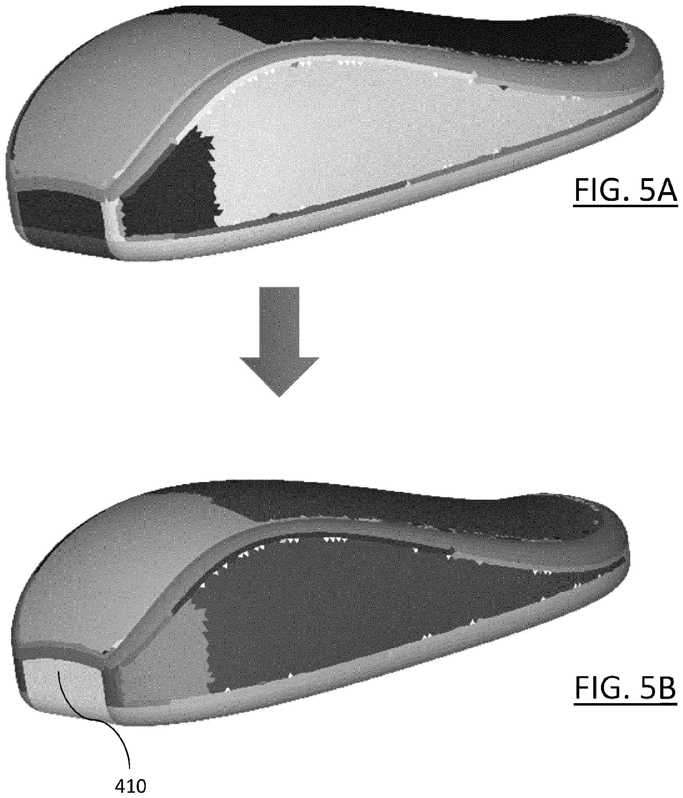

FIG.s 5A-B illustrate illustrate this step when using extrusions, revolutions, and fillets. The white nodes 410 in FIG. 5B are the frozen nodes and the other nodes representthe regions that are CAD features.

*Features aggregation*

Since the implementation makes an early stop during the hierarchical clustering, some neighbouring nodes could be part of the same features. Thus, after the initial features fitting step, the implementation makes another hierarchical clustering step with the following distance:

$$d(N_1, N_2) = \min_{\{feature\ fit\ on\ N_1 \cup N_2\}} score(feature)$$

This distance is infinitely large for all the neighbour nodes for which the implementation cannot fit any feature on their union to prevent from merging them. This allows stopping the hierarchical clustering only when neighbouring nodes can no longer be merge, i.e., when all neighbouring nodes distances are infinitely large. This improves the method as it is not required to determine a stopping threshold or a final number of clusters to stop this hierarchical clustering.

Furthermore, to prevent this distance computation to be costly, the implementation may use fast features aggregation techniques that quickly gives a fitting score alongside with features parameters for a reunion of nodes. An example of such a technique for extrusions can be seen in the already cited European Patent Application EP21306184.9 filed on 31 August 2021 by Dassault Systèmes. FIG.s 6A-B illustrate the features aggregation.

*Features filtering*

The features clustering can result in more features nodes than actually wanted, due to the fact that most small local regions can be fitted by a feature. Thus, the implementation removes fitted features that are smaller than a threshold (the same one as for canonics).

However, for some type of features (fillets for example), some wanted nodes could be smaller than the previous threshold. Consequently, for such features, other filtering techniques that are specific to each features should be used.

An example of a filtering technique on meshes for fillets is now discussed.

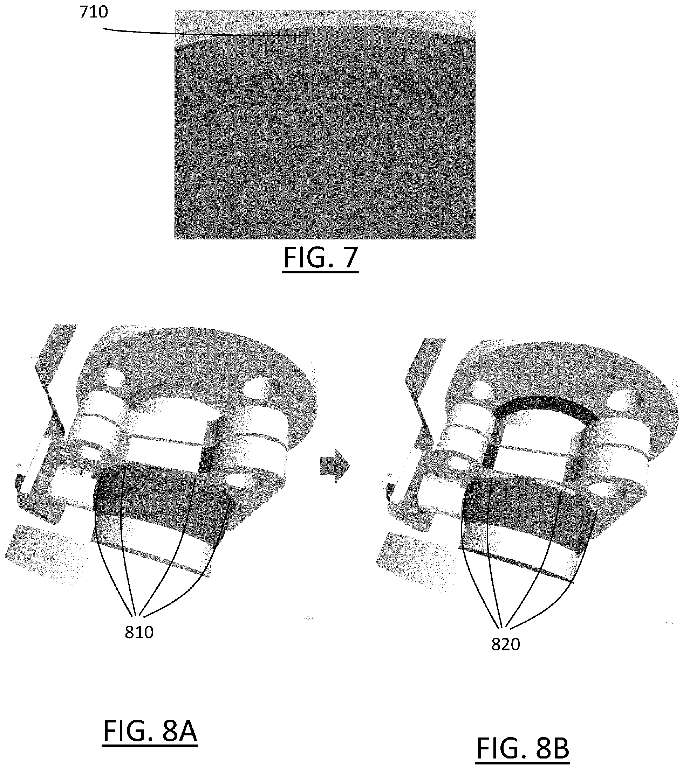

The problem with fillet is that any region which represent only a band of triangles, for example region 710 in FIG. 7, can be considered as a fillet. Such a region results in a fillet with a large radius. The implementation may then filter fillets with high value of radius, but it would filter valid fillet that have large radius. As fillet are threadlike (i.e., there are thick in one curvature direction and thin in the other one), to distinguish non-valid fillet from valid ones, the implementation computes the thread width of a region with the following formula:

$$threadWidth = perimeter - \frac{\sqrt{perimeter^2 - 16 * area}}{4}.$$

For a rectangular region, the thread width is exactly the width of the rectangle. The term *perimeter*[2] - 16 * *area* can be negative, so the implementation filters regions for which this term is negative. Such regions are usually close to a disk, which is not a desired shape for a fillet.

Finally, the implementation filters fillets whose ratio between radius and thread width is higher than a threshold (whose value can be taken in the range [1, 10] for example). FIG.s 8A-B illustrate the features filtering process, in which regions 810 are regions that are not features and thereby filtered/discarded by the implementation from the segmentation, resulted in white regions 820 in FIG. 8B. The feature nodes are then frozen during the following steps of the segmentation.

*Free-form surfaces segmentation*

Once canonics and features have been segmented, there can still be some unsegmented elements. Thus, the implementation merges all the unsegmented regions using region growing to group them into free-form surfaces. The implementation may give some control to a user in this step, using a clustering distance (e.g., as in the already cited European Patent Application EP4044116) to give control on where to stop the clustering.

**Claims**

1. An algorithm configured to run on a computer for segmenting a discrete 3D model representing a mechanical part, the algorithm comprising the following steps:

   - obtaining the discrete 3D model; and

- applying a hierarchical segmentation to the discrete 3D model, the hierarchical segmentation comprising:

o a first segmentation which comprises identifying, among elements of the discrete 3D model, first segments each corresponding to a primitive exhibiting at least one slippable motion; then
o a second segmentation which comprises identifying, among non-identified elements of the discrete 3D model, second segments each corresponding to a surface produced by a CAD feature; and then
o a third segmentation which comprises identifying, among non-identified elements of the discrete 3D model, third segments each corresponding to a free-form surface of the discrete 3D model,

wherein the algorithm further comprises the step of obtaining a predetermined set of CAD features, and in the second segmentation:

- the identifying comprises exploring and merging neighboring non-identified elements of the discrete 3D model according to an increasing distance order that is based on one or more respective feature distances quantifying shape similarity between a pair of CAD feature geometric surface portions;
- discarding each surface represented by a cluster of elements resulting from the merging and for which each fitting of a CAD feature to the surface results in a fitting error larger than the predefined fitting threshold,

wherein the one or more feature distances consist in one feature distance penalizing mean curvature discrepancy between surfaces and/or penalizing irregularity of merged surfaces,
wherein the one feature distance is of the type:

$$d(N_1, N_2)$$
$$= \begin{cases} \left(\overline{k_{max}}^{(N_1)} - \overline{k_{max}}^{(N_2)}\right)^2 * d_{shape\,factor}(N_1, N_2) \; if \; mean\left(\overline{k_{max}}^{(N_1)^2}, \overline{k_{max}}^{(N_2)^2}\right) < \epsilon \\ \dfrac{\left(\overline{k_{max}}^{(N_1)} - \overline{k_{max}}^{(N_2)}\right)^2}{mean(\overline{k_{max}}^{(N_1)^2}, \overline{k_{max}}^{(N_2)^2})} * d_{shape\,factor}(N_1, N_2) \; else \end{cases}$$

where $N_1$ and $N_2$ represent neighboring surfaces, $\overline{k}_{max}^{(j)}$ represents a mean maximal curvature of $N_j$, and where:

$$d_{shape\,factor}(N_1, N_2) = 1 + \max_{i \in \{1,2\}} \left(\left[\frac{P_{N_1 \cup N_2}}{\sqrt{A_{N_1 \cup N_2}}} - \frac{P_{N_i}}{\sqrt{A_{N_i}}}\right]_{\mathbb{R}^+} \min\left(\frac{A_{N_i}}{\alpha A_{N_{\bar{i}}}}, 1\right)\right)^2,$$

where $P_N$ represents the perimeter of N, $A_N$ the area of N, $[\cdots]_{\mathbb{R}^+}$ a clamping to $\mathbb{R}^+$, $N_{\bar{i}}$ a node $\in \{N_1, N_2\}$ which is not $N_i$, and $\alpha$ a hyper-parameter defining a reduced impact of a small surface, $\varepsilon$ being a parameter.

2. The algorithm of claim 1, wherein the second segmentation further comprises discarding each fitted CAD feature having a size smaller than a predefined a size threshold.

3. The algorithm of any of claims 1 to 2, wherein the algorithm further comprises the step of iteratively aggregating neighboring pairs of non-discarded clusters of elements, wherein at each iteration the algorithm comprises the step of optimizing a fitting error, the optimizing being of the type

$$\min_{\{f\,fit\,on\,N_1 \cup N_2\}} score(f)$$

where $N_1$ and $N_2$ represent two neighboring surfaces and *score(f)* measures a similarity between the feature *f* and the union $N_1 \cup N_2$ of $N_1$ and $N_2$.

4. The algorithm of any of claims 1 to 3, wherein the algorithm further comprises the steps of:

- rescaling one or more segments resulting from the third segmentation; and
- applying the hierarchical segmentation to each rescaled one or more segments.

5. The algorithm of any of claims 1 to 4, wherein the hierarchical segmentation is based on one or more tolerance thresholds, each tolerance threshold being a function of:

- an imprecision level of the discrete 3D model, the tolerance threshold increasing as the imprecision level increases,
- a discretization level (number of triangles or point density) of the discrete 3D model, the tolerance threshold increasing as the discretization level decreases, and/or
- a diameter of the discrete 3D model, the tolerance threshold increasing as the diameter increases.

6. The algorithm of claim 5, wherein the algorithm stops the second segmentation when the minimum of the one or more respective feature distance is higher than a least one of the one or more tolerance thresholds.

7. The algorithm of any one of claims 1 to 6, wherein the first segmentation further comprises, for each surface resulting from the merging, according to a decreasing order of surface size:

- fitting a canonic primitive to the surface;
- computing a fitting error; and
- if the fitting error is lower than a predefined fitting threshold, aggregating to the surface neighboring surfaces for which the fitting error is as well lower than the predefined fitting threshold; and optionally wherein the first segmentation further comprises filtering the fitted canonic primitives, by discarding each primitive fitting a local canonic area of a free-form surface, and further optionally the first segmentation further comprises discarding fitted primitives having a size smaller than a predefined another size threshold.

8. The algorithm of any one of claims 1 to 7, wherein in the second segmentation, the exploring and merging is based on a constraint that surfaces connected by a boundary corresponding to a known geometrical delimitation between portions of the discrete 3D model cannot be merged.

9. An algorithm configured to run on a computer for segmenting a discrete 3D model representing a mechanical part, the algorithm comprising:

- means for obtaining the discrete 3D model; and
- means for applying a hierarchical segmentation to the discrete 3D model, the hierarchical segmentation comprising:

  ○ a first segmentation which comprises identifying, among elements of the discrete 3D model, first segments each corresponding to a primitive exhibiting at least one slippable motion; then
  ○ a second segmentation which comprises identifying, among non-identified elements of the discrete 3D model, second segments each corresponding to a surface produced by a CAD feature; and then
  ○ a third segmentation which comprises identifying, among non-identified elements of the discrete 3D model, third segments each corresponding to a free-form surface of the discrete 3D model,

wherein the algorithm further comprises means for obtaining a predetermined set of CAD features, and in the second segmentation:

- the identifying comprises exploring and merging neighboring non-identified elements of the discrete 3D model according to an increasing distance order that is based on one or more respective feature distances quantifying shape similarity between a pair of CAD feature geometric surface portions;
- discarding each surface represented by a cluster of elements resulting from the merging and for which each fitting of a CAD feature to the surface results in a fitting error larger than the predefined fitting threshold,

wherein the one or more feature distances consist in one feature distance penalizing mean curvature discrepancy between surfaces and/or penalizing irregularity of merged surfaces,
wherein the one feature distance is of the type:

$$d(N_1, N_2)$$
$$= \begin{cases} \left(\overline{k_{max}}^{(N_1)} - \overline{k_{max}}^{(N_2)}\right)^2 * d_{shape\,factor}(N_1, N_2) \; if \; mean\left(\overline{k_{max}}^{(N_1)^2}, \overline{k_{max}}^{(N_2)^2}\right) < \epsilon \\[2em] \dfrac{\left(\overline{k_{max}}^{(N_1)} - \overline{k_{max}}^{(N_2)}\right)^2}{mean(\overline{k_{max}}^{(N_1)^2}, \overline{k_{max}}^{(N_2)^2})} * d_{shape\,factor}(N_1, N_2) \; else \end{cases}$$

where $N_1$ and $N_2$ represent neighboring surfaces, $\overline{k}_{max}^{(j)}$ represents a mean maximal curvature of $N_j$, and where:

$$d_{shape\,factor}(N_1, N_2) = 1 + \max_{i \in \{1,2\}} \left( \left[ \frac{P_{N_1 \cup N_2}}{\sqrt{A_{N_1 \cup N_2}}} - \frac{P_{N_i}}{\sqrt{A_{N_i}}} \right]_{\mathbb{R}^+} \min\left(\frac{A_{N_i}}{\alpha A_{N_{\bar{i}}}}, 1\right) \right)^2,$$

where $P_N$ represents the perimeter of N, $A_N$ the area of N, $[\cdots]_{\mathbb{R}^+}$ a clamping to $\mathbb{R}^+$, $N_{\bar{j}}$ a node $\in \{N_1, N_2\}$ which is not $N_i$, and $\alpha$ a hyper-parameter defining a reduced impact of a small surface, $\varepsilon$ being a parameter.

10. The algorithm of claim 9 wherein the second segmentation further comprises discarding each fitted CAD feature having a size smaller than a predefined a size threshold.

11. The algorithm of any of claims 9 to 10, wherein the algorithm further comprises means for iteratively aggregating neighboring pairs of non-discarded clusters of elements, wherein at each iteration the algorithm comprises the step of optimizing a fitting error, the optimizing being of the type

$$\min_{\{f\,fit\,on\,N_1 \cup N_2\}} score(f)$$

where $N_1$ and $N_2$ represent two neighboring surfaces and *score(f)* measures a similarity between the feature *f* and the union $N_1 \cup N_2$ of $N_1$ and $N_2$.

12. The algorithm of any of claims 9 to 11, wherein the algorithm further comprises means for:

- rescaling one or more segments resulting from the third segmentation; and
- applying the hierarchical segmentation to each rescaled one or more segments.

13. The algorithm of any of claims 9 to 12, wherein the hierarchical segmentation is based on one or more tolerance thresholds, each tolerance threshold being a function of:

- an imprecision level of the discrete 3D model, the tolerance threshold increasing as the imprecision level increases,
- a discretization level (number of triangles or point density) of the discrete 3D model, the tolerance threshold increasing as the discretization level decreases, and/or
- a diameter of the discrete 3D model, the tolerance threshold increasing as the diameter increases.

14. The algorithm of claim 13, wherein the algorithm comprises means for stopping the second segmentation when the minimum of the one or more respective feature distance is higher than a least one of the one or more tolerance thresholds.

15. The algorithm of any one of claims 9 to 14, wherein the first segmentation further comprises, for each surface resulting from the merging, according to a decreasing order of surface size:

- fitting a canonic primitive to the surface;
- computing a fitting error; and
- if the fitting error is lower than a predefined fitting threshold, aggregating to the surface neighboring surfaces for which the fitting error is as well lower than the predefined fitting threshold; and optionally wherein the first segmentation further comprises filtering the fitted canonic primitives, by discarding each primitive fitting a local canonic area of a free-form surface, and further optionally the first segmentation further comprises discarding fitted primitives having a size smaller than a predefined another size threshold.

16. The algorithm of any one of claims 9 to 15, wherein in the second segmentation, the exploring and merging is based on a constraint that surfaces connected by a boundary corresponding to a known geometrical delimitation between portions of the discrete 3D model cannot be merged.

FIG. 1

30

32

34

36

FIG. 2

3010

3020

3030

## FIG. 3

410

FIG. 4A

FIG. 4B

FIG. 5A

FIG. 5B

410

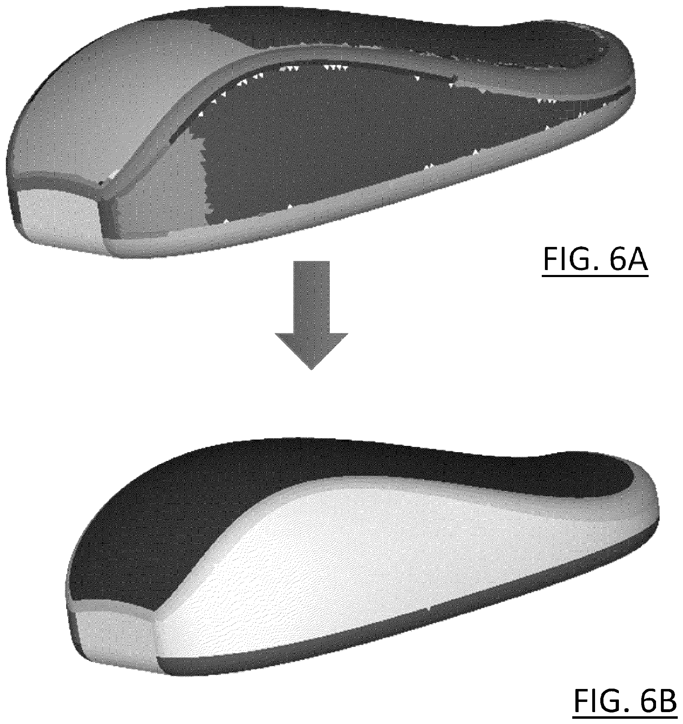

FIG. 6A

FIG. 6B

710

FIG. 7

810

820

FIG. 8A

FIG. 8B

<u>FIG. 9</u>

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 21305195
- EP 3327593 A
- EP 21306754
- EP 21306184
- EP 21305763
- EP 22306451
- EP 4044116 A

### Non-patent literature cited in the description

- **GELFAND N.** ; **GUIBAS L. J.** Shape Segmentation Using Local Slippage Analysis. *Eurographics Symposium on Geometry Processing*, 2004
- **A. KAISER**. A survey of Simple Geometric Primitives Detection Methods for Captured 3D data. *Computer Graphics Forum*, 2018, vol. 38 (4)
- **T. BIRDAL**. Generic Primitive Detection in Point Clouds Using Novel Minimal Quadric Fits. *IEEE Transactions on Pattern Analysis and Machine Intelligence*, 2019